# EUROPEAN PATENT SPECIFICATION

(11) **EP 4 537 220 B1**
(45) Date of publication and mention of the grant of the patent: **01.07.2026**
(21) Application number: 24731113.7
(22) Date of filing: 08.05.2024
(51) Int. Cl.: G06F 16/55, G06F 16/58, G06T 5/50, G06T 5/60, G06T 7/11

(54) **RELIGHTING OF OUTDOOR IMAGES USING MACHINE LEARNING**
WIEDERBELEUCHTUNG VON AUSSENBILDERN MITTELS MASCHINENLERNEN
CHANGEMENT D'ÉCLAIRAGE D'IMAGES EXTÉRIEURES À L'AIDE D'UN APPRENTISSAGE MACHINE

(30) Priority: 09.05.2023 US 202363465224 P
(43) Date of publication of application: 16.04.2025
(73) Proprietor: Google LLC, Mountain View, CA 94043 (US)
(72) Inventor: ABERMAN, Kfir, Mountain View, California 94043 (US); SARMA, Navin, Mountain View, California 94043 (US); TABELLION, Eric, Mountain View, California 94043 (US); JACOBS, David, Mountain View, California 94043 (US); CHU, Qinghao, Mountain View, California 94043 (US); FELDMAN, Bryan, Mountain View, California 94043 (US); ACHA, Alex Rav, Mountain View, California 94043 (US)
(74) Representative: Betten & Resch
(86) International application number: PCT/US2024/028410
(87) International publication number: WO 2024/233689

(56) References cited:
- YINGSHU CHEN ET AL: "Time-of-Day Neural Style Transfer for Architectural Photographs", ARXIV.ORG, CORNELL UNIVERSITY LIBRARY, 201 OLIN LIBRARY CORNELL UNIVERSITY ITHACA, NY 14853, 28 October 2022 (2022-10-28), XP091356185
- RAWAT SAUMYA ET AL: "Find Me a Sky: A Data-Driven Method for Color-Consistent Sky Search and Replacement", 13 January 2018, SAT 2015 18TH INTERNATIONAL CONFERENCE, AUSTIN, TX, USA, SEPTEMBER 24-27, 2015; [LECTURE NOTES IN COMPUTER SCIENCE; LECT.NOTES COMPUTER], SPRINGER, BERLIN, HEIDELBERG, PAGE(S) 216 - 228, ISBN: 978-3-540-74549-5, XP047460388
- ZHENGXIA ZOU: "Castle in the Sky: Dynamic Sky Replacement and Harmonization in Videos", ARXIV.ORG, CORNELL UNIVERSITY LIBRARY, 201 OLIN LIBRARY CORNELL UNIVERSITY ITHACA, NY 14853, 22 October 2020 (2020-10-22), XP081793408
- TSAI YI-HSUAN ET AL: "Sky is not the limit", ACM TRANSACTIONS ON GRAPHICS, ACM, NY, US, vol. 35, no. 4, 11 July 2016 (2016-07-11), pages 1 - 11, XP059155494, ISSN: 0730-0301, DOI: 10.1145/2897824.2925942
- LI NIU ET AL: "Making Images Real Again: A Comprehensive Survey on Deep Image Composition", ARXIV.ORG, CORNELL UNIVERSITY LIBRARY, 201 OLIN LIBRARY CORNELL UNIVERSITY ITHACA, NY 14853, 11 July 2022 (2022-07-11), XP091267265

## Description

### CROSS-REFERENCE TO RELATED APPLICATIONS

The present application claims priority to U.S. Provisional Patent Application No. 63/465,224, filed May 9, 2023, and titled "Relighting of Outdoor Images Using Machine Learning".

### BACKGROUND

Machine-learning models may generate outdoor scenes; however, the scenes are often unrealistic. For example, machine-learning models may generate nighttime scenes with shadows. Furthermore, machine-learning models may generate outdoor scenes with people that are unrealistic where the more detailed aspects of the people may be improperly represented. For example, the people may look like they were photographed indoors while the background matches a sunset.

The background description provided herein is for the purpose of generally presenting the context of the disclosure. Work of the presently named inventors, to the extent it is described in this background section, as well as aspects of the description that may not otherwise qualify as prior art at the time of filing, are neither expressly nor impliedly admitted as prior art against the present disclosure.

Yingshu Chen et al: "Time-of-Day Neural Style Transfer for Architectural Photographs", ARXIV.ORG, Cornell University Library, 201 OLIN LIBRARY CORNELL UNIVERSITY ITHACA, NY 14853, 28 October 2022 (2022-10-28), XP091356185, describes a neural style transfer method for architectural photography. The method addresses the composition of the foreground and background in an architectural photograph in a two-branch neural network that separately considers the style transfer of the foreground and the background, respectively. The method comprises a segmentation module, a learning-based image-to-image translation module, and an image blending optimization module. The image-to-image translation neural network is trained with a dataset of unconstrained outdoor architectural photographs captured at different magic times of a day, utilizing additional semantic information for better chrominance matching and geometry preservation.

Rawat Saumya et al: "Find Me a Sky: A Data-Driven Method for Color-Consistent Sky Search and Replacement", 13 January 2018 (2018-01-13), SAT 2015 18TH International Conference, Austin, TX, USA, September 24-27, 2015; [Lecture Notes in Computer Science; LECT.NOTES COMPUTER], Springer, Berlin, Heidelberg, pages 216 to 228, XP047460388, ISBN: 9783540745495, proposes a data-driven approach to sky-replacement that avoids color correction by finding a diverse set of skies that are consistent in color and natural illumination with the query image foreground. The database used consists of ~1200 natural images spanning many outdoor categories. Given a query image, the most consistent images are retrieved from the database according to L2 similarity in feature space and produce candidate composites. The candidates are re-ranked based on realism and diversity. We used pre-trained CNN features and a rich set of hand-crafted features that encode color statistics, structural layout, and natural illumination statistics, but observed color statistics to be the most effective for this task.

Zhengxia Zou: "Castle in the Sky: Dynamic Sky Replacement and Harmonization in Videos", ARXIV.ORG, Cornell University Library, 201 OLIN LIBRARY CORNELL UNIVERSITY ITHACA, NY 14853, 22 October 2020 (2020-10-22), XP081793408, proposes a vision-based method for video sky replacement and harmonization, which can automatically generate realistic and dramatic sky backgrounds in videos with controllable styles. Different from previous sky editing methods that either focus on static photos or require inertial measurement units integrated in smartphones on shooting videos, the proposed method is purely vision-based, without any requirements on the capturing devices, and can be applied to either online or offline processing scenarios.

Tsai Yi-Hsuan et al: "Sky is not the limit", ACM Transactions on Graphics, ACM, NY, US,Vol. {0} 35, No. {0} 4, 11 July 2016 (2016-07-11), pages 1 to 11, XP059155494 DOI: 10.1145/2897824.2925942, ISSN:0730-0301, proposes an automatic background replacement algorithm that can generate realistic, artifact-free images with a diverse styles of skies. The key idea of the algorithm is to utilize visual semantics to guide the entire process including sky segmentation, search and replacement. First, a deep convolutional neural network is trained for semantic scene parsing, which is used as visual prior to segment sky regions in a coarse-to-fine manner. Second, in order to find proper skies for replacement, a data-driven sky search scheme is proposed based on semantic layout of the input image. Finally, to re-compose the stylized sky with the original foreground naturally, an appearance transfer method is developed to match statistics locally and semantically.

### SUMMARY

Objects of the present disclosure are achieved by the subject matters of the independent claims. Dependent claims define some of possible exemplary embodiments.

A computer-implemented method includes providing, as input to a diffusion model, an initial image and a request to change a lighting in the initial image, wherein the initial image includes a subject and a sky. The method further includes outputting, with the diffusion model, an output image that satisfies the request. The method further includes determining, from the initial image, a sky segment and a subject segment. The method further includes generating a sky mask that corresponds to the sky segment and a subject mask that corresponds to the subject segment. The method further includes modifying a coloring of the initial image to match a coloring of the output image. The method further includes blending the modified initial image with the output image to form a blended image while using the subject mask to prevent modification to the subject from the modified initial image and the sky mask to prevent modification to the sky from the output image during the blending.

In some embodiments, modifying the coloring of the initial image includes performing Bilateral Grid Upsampling (BGU) that identifies a local color transformation between the initial image and the output image and applying the local color transformation to the initial image while using the sky mask to prevent coloring of the sky. In some embodiments, the method further includes generating a super resolution version of at least a portion of the output image from the output image, where blending the modified initial image with the output image includes blending the super resolution version of at least the portion of the output image while using the subject mask to prevent modification to the subject from the modified initial image and the sky mask to prevent modification to the sky from the super resolution version of at least the portion of the output image during the blending. In some embodiments, the output image includes one or more shadows that correspond to one or more objects in the output image and the method further includes determining, from the output image, a shadow segment that corresponds to the one or more shadows in the output image and generating a shadow mask that corresponds to the shadow segment, where blending the output image with the modified initial image includes using the shadow mask to prevent modification to the one or more shadows from the output image during the blending.

In some embodiments, the request to change the lighting includes a user providing a textual request that includes an attribute selected from a group of a level of light, an amount of clouds in the sky, a color of the sky, and combinations thereof. In some embodiments, the request to change the lighting is selected from a group of a regional suggestion associated with one or more regions of the initial image, a global preset, a menu of options, a library of premade textual requests, and combinations thereof. In some embodiments, the method further includes determining that the initial image includes an outdoor scene and providing a suggestion to a user to modify the lighting.

A non-transitory computer-readable medium with instructions stored thereon that, when executed by one or more processors, cause the one or more processors to perform operations. The operations include providing, as input to a diffusion model, an initial image and a request to change a lighting in the initial image, wherein the initial image includes a subject and a sky; outputting, with the diffusion model, an output image that satisfies the request; determining, from the initial image, a sky segment and a subject segment; generating a sky mask that corresponds to the sky segment and a subject mask that corresponds to the subject segment; modifying a coloring of the initial image to match a coloring of the output image; and blending the modified initial image with the output image to form a blended image while using the subject mask to prevent modification to the subject from the modified initial image and the sky mask to prevent modification to the sky from the output image during the blending.

In some embodiments, modifying the coloring of the initial image includes performing BGU that identifies a local color transformation between the initial image and the output image and applying the local color transformation to the initial image while using the sky mask to prevent coloring of the sky. In some embodiments, the operations further include generating a super resolution version of at least a portion of the output image from the output image, where blending the modified initial image with the output image further includes blending the modified initial image with the output image includes blending the super resolution version of at least the portion of the output image while using the subject mask to prevent modification to the subject from the modified initial image and the sky mask to prevent modification to the sky from the super resolution version of at least the portion of the output image during the blending. In some embodiments, the output image includes one or more shadows that correspond to one or more objects in the output image and the operations further include determining, from the output image, a shadow segment that corresponds to the one or more shadows in the output image and generating a shadow mask that corresponds to the shadow segment, where blending the output image with the modified initial image includes using the shadow mask to prevent modification to the one or more shadows from the output image during the blending. In some embodiments, the request to change the lighting includes a user providing a textual request that includes an attribute selected from a group of a level of light, an amount of clouds in the sky, a color of the sky, and combinations thereof. In some embodiments, the request to change the lighting is selected from a group of a regional suggestion associated with one or more regions of the initial image, a global preset, a menu of options, a library of premade textual requests, and combinations thereof. In some embodiments, the operations further include determining that the initial image includes an outdoor scene and providing a suggestion to a user to modify the lighting.

A system includes a processor and a memory coupled to the processor, with instructions stored thereon that, when executed by the processor, cause the processor to perform operations. The operations include providing, as input to a diffusion model, an initial image and a request to change a lighting in the initial image, wherein the initial image includes a subject and a sky; outputting, with the diffusion model, an output image that satisfies the request; determining, from the initial image, a sky segment and a subject segment; generating a sky mask that corresponds to the sky segment and a subject mask that corresponds to the subject segment; modifying a coloring of the initial image to match a coloring of the output image; and blending the modified initial image with the output image to form a blended image while using the subject mask to prevent modification to the subject from the modified initial image and the sky mask to prevent modification to the sky from the output image during the blending.

In some embodiments, modifying the coloring of the initial image includes performing BGU that identifies a local color transformation between the initial image and the output image and applying the local color transformation to the initial image while using the sky mask to prevent coloring of the sky. In some embodiments, the operations further include generating a super resolution version of at least a portion of the output image from the output image, where blending the modified initial image with the output image includes blending the super resolution version of at least the portion of the output image while using the subject mask to prevent modification to the subject from the modified initial image and the sky mask to prevent modification to the sky from the super resolution version of at least the portion of the output image during the blending. In some embodiments, the output image includes one or more shadows that correspond to one or more objects in the output image and the operations further include determining, from the output image, a shadow segment that corresponds to the one or more shadows in the output image and generating a shadow mask that corresponds to the shadow segment, where blending the output image with the modified initial image includes using the shadow mask to prevent modification to the one or more shadows from the output image during the blending. In some embodiments, the request to change the lighting includes a user providing a textual request that includes an attribute selected from a group of a level of light, an amount of clouds in the sky, a color of the sky, and combinations thereof. In some embodiments, the request to change the lighting is selected from a group of a regional suggestion associated with one or more regions of the initial image, a global preset, a menu of options, a library of premade textual requests, and combinations thereof.

### BRIEF DESCRIPTION OF THE DRAWINGS

Figure 1 is a block diagram of an example network environment, according to some embodiments described herein.
Figure 2 is a block diagram of an example computing device, according to some embodiments described herein.
Figure 3 illustrates example user interfaces that include options for selecting different aspects of the image to change, a field for providing text, and an example output image, according to some embodiments described herein.
Figures 4A-4B illustrate example user interfaces that include options for selecting different types of modifications for changing a lighting in an image, according to some embodiments described herein.
Figure 5 is a block diagram of an example architecture for generating a blended image that incorporates a textual request, according to some embodiments described herein.
Figure 6 illustrates an example flowchart of a method to generate a blended image with modified lighting, according to some embodiments described herein.

### DETAILED DESCRIPTION

Machine-learning models may generate outdoor scenes; however, the scenes are often unrealistic. For example, machine-learning models may generate nighttime scenes with shadows. Furthermore, machine-learning models may generate outdoor scenes with people that are unrealistic where the more detailed aspects of the people may be improperly represented. For example, the people may look like they were photographed indoors while the background matches a sunset.

The technology described below describes a media application that advantageously modifies a lighting of an input image by outputting, with a diffusion model, an output image that satisfies a request to modify the lighting. For example, a user may provide a textual request to change an image of a person captured outdoors on a sunny day to the image of the person in a moonlit sky.

The media application generates an output image. For example, the media application may use a diffusion model to generate a synthetic moonlit sky. The media application determines a sky segment and a subject segment from the initial image. The media application generates a subject mask that corresponds to the subject segment and a sky mask that corresponds to the sky segment.

The media application modifies a coloring of the initial image to match a coloring of the output image. The coloring ensures that the coloring of the subject matches the changes to the output image. For example, replacing a sunny image with a moonlit image results in changing the colors cast on the person from including all colors to including mostly shades of blue, purple, or black. The media application may modify the coloring of the initial image by performing Bilateral Grid Upsampling (BGU) to identify a local color transformation between the initial image and the output image. The media application may also generate a super resolution version of at least a portion of the output image (e.g., the synthetic sky portion of the output image) from the output image. The super resolution version of the output image advantageously extracts more details from a lower-resolution output image to improve the quality of the output image.

The media application blends the modified initial image (i.e., the initial image that is modified to match the coloring of the output image) with the super resolution version of at least the portion of the output image to form a blended image while using the subject mask to prevent modification to the subject from the modified image and the sky mask to prevent modification to the sky from the super resolution version during the blending.

### Example Environment 100

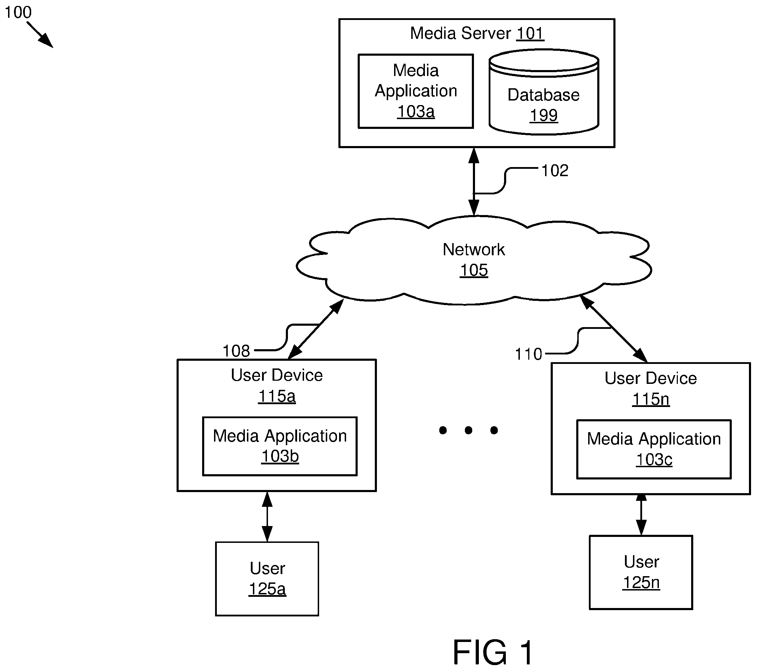

Figure 1 illustrates a block diagram of an example environment 100. In some embodiments, the environment 100 includes a media server 101, a user device 115a, and a user device 115n coupled to a network 105. Users 125a, 125n may be associated with respective user devices 115a, 115n. In some embodiments, the environment 100 may include other servers or devices not shown in Figure 1. In Figure 1 and the remaining figures, a letter after a reference number, e.g., "115a," represents a reference to the element having that particular reference number. A reference number in the text without a following letter, e.g., "115," represents a general reference to embodiments of the element bearing that reference number.

The media server 101 may include a processor, a memory, and network communication hardware. In some embodiments, the media server 101 is a hardware server. The media server 101 is communicatively coupled to the network 105 via signal line 102. Signal line 102 may be a wired connection, such as Ethernet, coaxial cable, fiber-optic cable, etc., or a wireless connection, such as Wi-Fi^{®}, Bluetooth^{®}, or other wireless technology. In some embodiments, the media server 101 sends and receives data to and from one or more of the user devices 115a, 115n via the network 105. The media server 101 may include a media application 103a and a database 199.

The database 199 may store machine-learning models, training data sets, images, etc. The database 199 may also store social network data associated with users 125, user preferences for the users 125, etc.

The user device 115 may be a computing device that includes a memory coupled to a hardware processor. For example, the user device 115 may include a mobile device, a tablet computer, a mobile telephone, a wearable device, a head-mounted display, a mobile email device, a portable game player, a portable music player, a reader device, or another electronic device capable of accessing a network 105.

In the illustrated implementation, user device 115a is coupled to the network 105 via signal line 108 and user device 115n is coupled to the network 105 via signal line 110. The media application 103 may be stored as media application 103b on the user device 115a and/or media application 103c on the user device 115n. Signal lines 108 and 110 may be wired connections, such as Ethernet, coaxial cable, fiber-optic cable, etc., or wireless connections, such as Wi-Fi^{®}, Bluetooth^{®}, or other wireless technology. User devices 115a, 115n are accessed by users 125a, 125n, respectively. The user devices 115a, 115n in Figure 1 are used by way of example. While Figure 1 illustrates two user devices, 115a and 115n, the disclosure applies to a system architecture having one or more user devices 115.

The media application 103 may be stored on the media server 101 or the user device 115. In some embodiments, the operations described herein are performed on the media server 101 or the user device 115. In some embodiments, some operations may be performed on the media server 101 and some may be performed on the user device 115. Performance of operations is in accordance with user settings. For example, the user 125a may specify settings that operations are to be performed on their respective device 115a and not on the media server 101. With such settings, operations described herein are performed entirely on user device 115a and no operations are performed on the media server 101. Further, a user 125a may specify that images and/or other data of the user is to be stored only locally on a user device 115a and not on the media server 101. With such settings, no user data is transmitted to or stored on the media server 101. Transmission of user data to the media server 101, any temporary or permanent storage of such data by the media server 101, and performance of operations on such data by the media server 101 are performed only if the user has agreed to transmission, storage, and performance of operations by the media server 101. Users are provided with options to change the settings at any time, e.g., such that they can enable or disable the use of the media server 101.

Machine learning models (e.g., neural networks or other types of models), if utilized for one or more operations, are stored and utilized locally on a user device 115, with specific user permission. Server-side models are used only if permitted by the user. Further, a trained model may be provided for use on a user device 115. During such use, if permitted by the user 125, on-device training of the model may be performed. Updated model parameters may be transmitted to the media server 101 if permitted by the user 125, e.g., to enable federated learning. Model parameters do not include any user data.

The media application 103 receives a request to change a lighting in the initial image. The request may include a text request, a selection of a suggestion, a selection of a preset, a selection of an option from a library of premade textual requests, etc. The initial image includes a subject.

The media application 103 provides, as input to a diffusion model, the initial image and the request. The diffusion model outputs an output image that satisfies the request by including the features described in the request. For example, if the request asks to change an input image from a rainy image with a cloudy sky to a clear sky at sunset, the output image includes the clear sky at sunset. Thus, the output image corresponds to the initial image and represents an amended initial image, wherein the amendments of the initial image are performed in response to the request, i.e. in response to the requested changes in the request. Specifically, the output image is the initial image that is amended by implementing the changes (e.g., changes of the lighting in the initial image) indicated in the request.

The media application 103 determines, from the initial image, a sky segment and a subject segment. The media application 103 generates a sky mask that corresponds to the sky segment and a subject mask that corresponds to the subject segment. The media application 103 modifies a coloring of the initial image to match a coloring of the output image. The media application 103 blends the modified initial image with the output image to form a blended image while using the subject mask to prevent modification to the subject from the modified initial image and the sky mask to prevent modification to the sky from the output image during the blending.

In some embodiments, the media application 103 may be implemented using hardware including a central processing unit (CPU), a field-programmable gate array (FPGA), an application-specific integrated circuit (ASIC), machine learning processor/ coprocessor, any other type of processor, or a combination thereof. In some embodiments, the media application 103a may be implemented using a combination of hardware and software.

### Example Computing Device 200

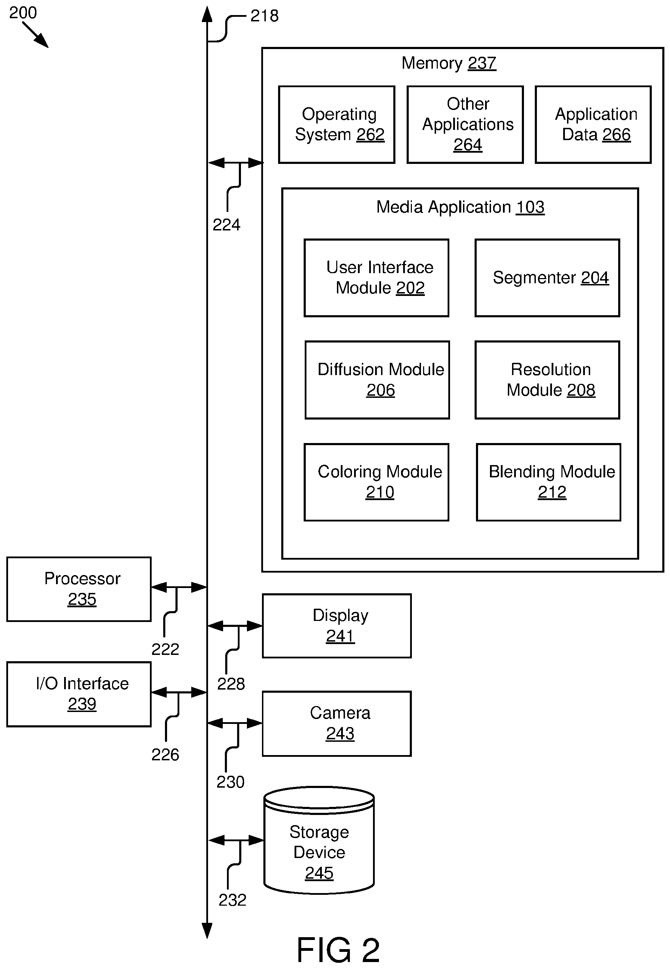

Figure 2 is a block diagram of an example computing device 200 that may be used to implement one or more features described herein. Computing device 200 can be any suitable computer system, server, or other electronic or hardware device. In one example, computing device 200 is media server 101 used to implement the media application 103a. In another example, computing device 200 is a user device 115.

In some embodiments, computing device 200 includes a processor 235, a memory 237, an input/output (I/O) interface 239, a display 241, a camera 243, and a storage device 245 all coupled via a bus 218. The processor 235 may be coupled to the bus 218 via signal line 222, the memory 237 may be coupled to the bus 218 via signal line 224, the I/O interface 239 may be coupled to the bus 218 via signal line 226, the display 241 may be coupled to the bus 218 via signal line 228, the camera 243 may be coupled to the bus 218 via signal line 230, and the storage device 245 may be coupled to the bus 218 via signal line 232.

Processor 235 can be one or more processors and/or processing circuits to execute program code and control basic operations of the computing device 200. A "processor" includes any suitable hardware system, mechanism or component that processes data, signals or other information. A processor may include a system with a general-purpose central processing unit (CPU) with one or more cores (e.g., in a single-core, dual-core, or multi-core configuration), multiple processing units (e.g., in a multiprocessor configuration), a graphics processing unit (GPU), a field-programmable gate array (FPGA), an application-specific integrated circuit (ASIC), a complex programmable logic device (CPLD), dedicated circuitry for achieving functionality, a special-purpose processor to implement neural network model-based processing, neural circuits, processors optimized for matrix computations (e.g., matrix multiplication), or other systems. In some embodiments, processor 235 may include one or more co-processors that implement neural-network processing. In some embodiments, processor 235 may be a processor that processes data to produce probabilistic output, e.g., the output produced by processor 235 may be imprecise or may be accurate within a range from an expected output. Processing need not be limited to a particular geographic location or have temporal limitations. For example, a processor may perform its functions in real-time, offline, in a batch mode, etc. Portions of processing may be performed at different times and at different locations, by different (or the same) processing systems. A computer may be any processor in communication with a memory.

Memory 237 is typically provided in computing device 200 for access by the processor 235, and may be any suitable processor-readable storage medium, such as random access memory (RAM), read-only memory (ROM), Electrical Erasable Read-only Memory (EEPROM), Flash memory, etc., suitable for storing instructions for execution by the processor or sets of processors, and located separate from processor 235 and/or integrated therewith. Memory 237 can store software operating on the computing device 200 by the processor 235, including a media application 103.

The memory 237 may include an operating system 262, other applications 264, and application data 266. Other applications 264 can include, e.g., an image library application, an image management application, an image gallery application, communication applications, web hosting engines or applications, media sharing applications, etc. One or more methods disclosed herein can operate in several environments and platforms, e.g., as a stand-alone computer program that can run on any type of computing device, as a web application having web pages, as a mobile application ("app") run on a mobile computing device, etc.

The application data 266 may be data generated by the other applications 264 or hardware of the computing device 200. For example, the application data 266 may include images used by the image library application and user actions identified by the other applications 264 (e.g., a social networking application), etc.

I/O interface 239 can provide functions to enable interfacing the computing device 200 with other systems and devices. Interfaced devices can be included as part of the computing device 200 or can be separate and communicate with the computing device 200. For example, network communication devices, storage devices (e.g., memory 237 and/or storage device 245), and input/output devices can communicate via I/O interface 239. In some embodiments, the I/O interface 239 can connect to interface devices such as input devices (keyboard, pointing device, touchscreen, microphone, scanner, sensors, etc.) and/or output devices (display devices, speaker devices, printers, monitors, etc.).

Some examples of interfaced devices that can connect to I/O interface 239 can include a display 241 that can be used to display content, e.g., images, video, and/or a user interface of an output application as described herein, and to receive touch (or gesture) input from a user. For example, display 241 may be utilized to display a user interface that includes a graphical guide on a viewfinder. Display 241 can include any suitable display device such as a liquid crystal display (LCD), light emitting diode (LED), or plasma display screen, cathode ray tube (CRT), television, monitor, touchscreen, three-dimensional display screen, or other visual display device. For example, display 241 can be a flat display screen provided on a mobile device, multiple display screens embedded in a glasses form factor or headset device, or a monitor screen for a computer device.

Camera 243 may be any type of image capture device that can capture images and/or video. In some embodiments, the camera 243 captures images or video that the I/O interface 239 transmits to the media application 103.

The storage device 245 stores data related to the media application 103. For example, the storage device 245 may store a training data set that includes labeled images, a machine-learning model, output from the machine-learning model, etc.

Figure 2 illustrates an example media application 103, stored in memory 237, that includes a user interface module 202, a segmenter 204, a diffusion module 206, a resolution module 208, a coloring module 210, and a blending module 212.

The user interface module 202 generates graphical data for displaying a user interface that includes images. In some embodiments, the user interface module 202 receives an initial image. The initial image may be received from the camera 243 of the computing device 200 or from the media server 101 via the I/O interface 239. The initial image includes a subject, such as a person, an animal, trees, etc. The subject may include multiple subjects, such as a person and a dog, a series of buildings, etc.

The user interface module 202 includes an option for providing a request associated with the image. In some embodiments, the request is a textual request received from a user. The user interface module 202 may include a text box where a user inputs a textual request. For example, the textual request may include asking for a change to a level of light (e.g., lighten the sky, change the sky to a sunset, make the sky dark, generate a moonlit night, etc.), an amount of clouds in the sky (e.g., make it cloudy, take out the clouds, illustrate rain, etc.), and/or a color of the sky (e.g., add purples and blues, include light orange and dark yellow, make the sky look like a rainbow, etc.).

In some embodiments, the user interface module 202 may provide the user with suggestions or presets that form part of the request to change the lighting. The suggestion may include a regional suggestion associated with one or more regions of the initial image. For example, an initial image may include different regions with different attributes, such as a sky, clouds in the sky, a horizon, water, etc.

The suggestions or presets may also include a global preset (e.g., a change that affects the entire image), a menu of options (e.g., changes for different parts of the image, different themes, etc.), and/or a library of premade textual requests (e.g., sky options, golden hour options, etc.).

In some embodiments, the user interface module 202 may determine that the initial image includes an outdoor scene. For example, object recognition may be performed on the initial image to determine whether the initial image includes outdoor objects. The user interface module 202 provides a suggestion to the user to modify the lighting. The suggestion may take the form of a button that the user may select to generate a list of options, a menu of suggestions, a text field to appear where the user can directly enter a request, etc.

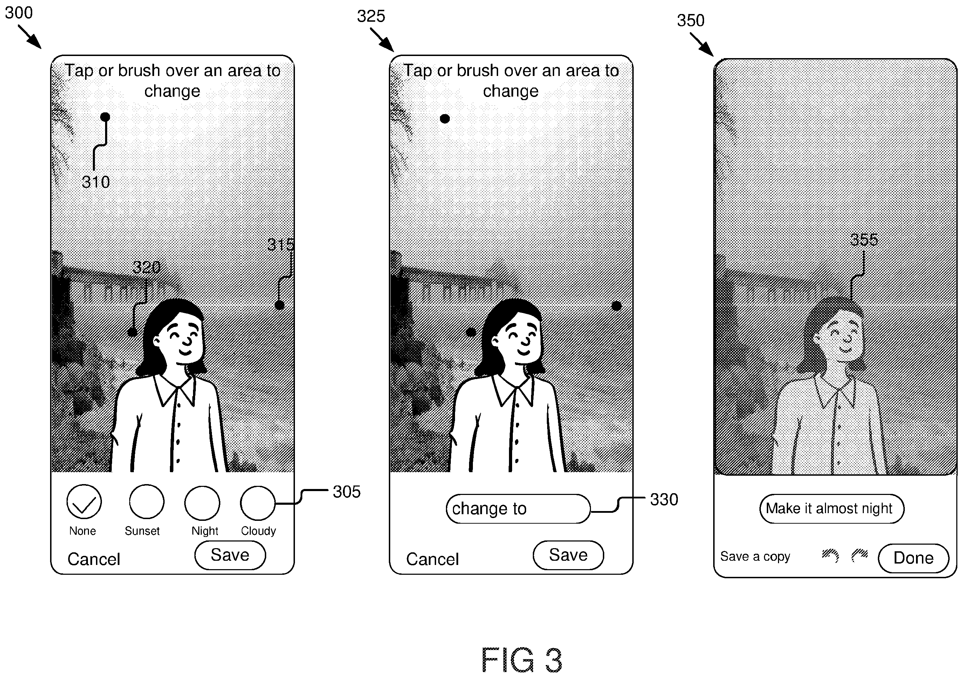

Figure 3 illustrates example user interfaces 300, 325, 350 that includes options for selecting different aspects of the lighting to change, a field for providing text, and an example output image, according to some embodiments described herein. Specifically, the first user interface 300 automatically provides global presets 305 for a user to select to change the lighting to look like a sunset, nighttime, a cloudy sky, etc. The first user interface 300 also includes circles 310, 315, 320 that represent regional suggestions on different areas, which allows the user to specify changes that are made only to the sky, fog, and the water, respectively. For example, a user may tap on circle 310 to change the sky, circle 315 to change the fog, or circle 320 to change the water.

The second user interface 325 includes a text input field 330 where the user can specify changes that they want made. The user can either include a description specific enough to encompass the objects that the user wants to be changed (e.g., change the water to be smoother) or the user can select an object in the second user interface 325 that the user wants to be changed and then describe the particular changes to be made.

The third user interface 350 includes the output image where the text request of "make it almost night" has been fulfilled. The resulting image has both a darker background and a darker subject 355 because the subject 355 is modified to look consistent with the modified lighting.

The user interface module 202 generates graphical data for displaying an output image. In some embodiments, the user interface may also include options for editing the output image, sharing the output image, adding the output image to a photo album, etc. In some embodiments, the output image is marked to identify that artificial intelligence was used to generate the image.

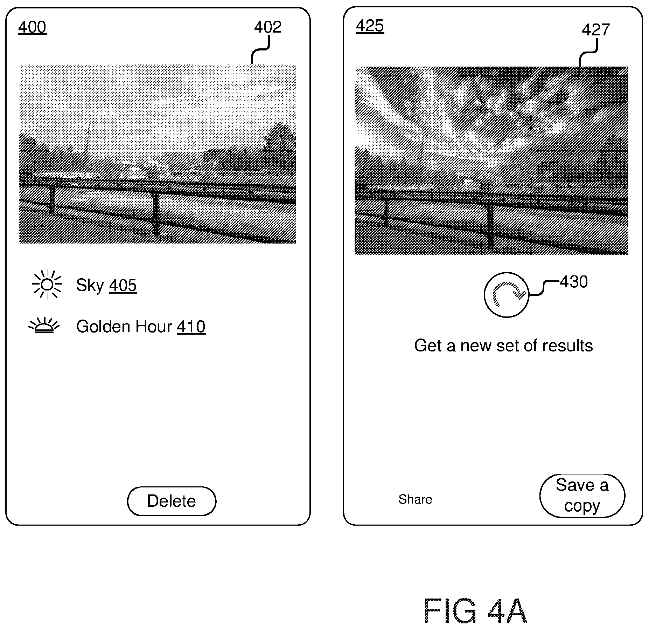

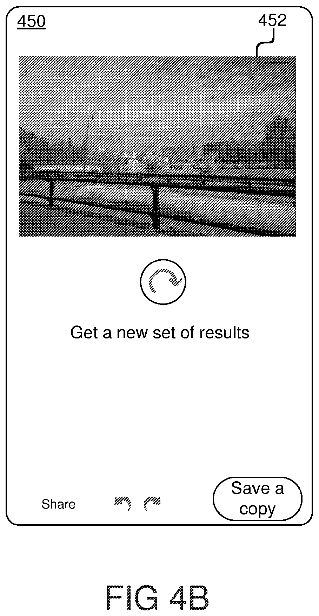

Figures 4A-4B illustrate example user interfaces 400, 425, 450 that include options for selecting different types of modifications for changing a lighting in an image, according to some embodiments described herein. The first user interface 400 includes options for modifying different aspects of an input image 402. The user interface module 202 provides options for generating a different sky 405 or a golden hour 410. Other variations are possible.

The second user interface 425 illustrates an output image 427 generated by the blending module 212 responsive to a user selecting the sky 405 option in the first user interface 400. The sky 405 option includes different types of skies with variations on clouds, shades of blue, levels of light, etc. The user interface module 202 may provide one or more output images to the user from which to select an image. The user may also select a button 430 to obtain a new set of results with different types of skies in the output images.

The third user interface 450 illustrates an output image 452 generated by the blending module 212 responsive to a user selecting the golden hour 410 option in the first user interface 400. The golden hour 410 option includes images during the day shortly after sunrise or before sunset when the daylight is redder and softer than when the sun is higher in the sky. The user interface module 202 may provide one or more output images to the user from which to select an image. The user may also select a button 430 to obtain a new set of results with different types of golden hour output images.

In some embodiments, the user interface module 202 generates a user interface that includes options for modifying user preferences. For example, the user interface may include a user preference for specifying a level of stochasticity that includes how much noise the user wants to see in an output image (e.g., the extent to which the output image differs from the initial image) and an extent that a seed is used in the output image (e.g., the extent to which the output image differs from that captured by a camera). The levels of stochasticity and the extent that the seed is used may be expressed using radio buttons for different levels (e.g., low, medium, high), a slider for a scale, a text box for a percentage, or other options.

The segmenter 204 segments the initial image. In some embodiments, the segmenter 204 determines a sky segment and a subject segment. The segmenter 204 may also generate a shadow segment that corresponds to one or more shadows added to an output image that correspond to objects in the output image. The sky segment includes pixels that correspond to a location of the sky in the initial image. The subject segment includes pixels that correspond to the subject where the subject may be a person, a dog, buildings, etc. The shadow segment includes pixels that are associated with shadows in the output image. Additional segmentation may be applied, such as by generating one or more of a foreground segment, a product segment (cloth, shoes, bags, etc.), a powerline segment, a skin segment, etc. In some embodiments, the segmenter 204 generates a segmentation map that associates an identity with each pixel in the initial image as belonging to the sky, one or more subjects, a shadow segment, etc.

The segmenter 204 may perform the segmentation by performing object recognition on the initial image to identify objects in the initial image. For example, the segmenter 204 may compare the sky and the one or more subjects in the initial image to object priors of skies, people, shadows, vehicles, buildings, etc. to identify expected shapes of objects in order to determine whether pixels are associated with the sky or the subject in the initial image, or shadows in the output image. In some embodiments, the segmenter 204 may divide the image into a foreground and a background before performing object recognition to aid in identifying the sky and the subject because the sky is located in the background and the subject is located in the foreground. The segmenter 204 may associate segments with locations in the initial image, such as a bounding box with x, y coordinates and a scale, coordinates for pixels associated with the segments, etc.

The segmenter 204 generates one or more preserving masks. The segmenter 204 generates a sky mask that functions as a preserving mask that corresponds to the sky segment. For example, the sky mask comprises pixels corresponding to pixels of the sky segment in the initial image. The segmenter 204 generates a subject mask that functions as a preserving mask that corresponds to the subject segment. For example, the subject mask comprises pixels corresponding to pixels of the subject segment in the initial image. In some embodiments, the segmenter 204 generates a shadow mask that functions as a preserving mask that corresponds to the shadows in the output image.

In some embodiments, the preserving mask is generated based on generating superpixels for the image and matching superpixel centroids to depth map values (e.g., obtained by the camera 243 using a depth sensor or by deriving depth from pixel values) to cluster detections based on depth. More specifically, depth values in a masked area may be used to determine a depth range and superpixels may be identified that fall within the depth range.

Another technique for generating a mask includes weighing depth values based on how close the depth values are to the preserving mask where weights were represented by a distance transform map.

In some embodiments, the segmenter 204 uses a machine-learning algorithm, such as a neural network, to segment the initial image and generate the preserving mask. In some embodiments, the segmenter 204 may specify a circuit configuration (e.g., for a programmable processor, for a field programmable gate array (FPGA), etc.) enabling processor 235 to apply a machine-learning model. In some embodiments, the segmenter 204 may include software instructions, hardware instructions, or a combination. In some embodiments, the segmenter 204 may offer an application programming interface (API) that can be used by the operating system 262 and/or other applications 264 to invoke the segmenter 204 e.g., to apply the machine-learning model to application data 266 to output the preserving mask.

The segmenter 204 uses training data to generate a trained machine-learning model. For example, training data may include pairs of initial images with a sky and a subject and output images with a sky mask and a subject mask.

Training data may be obtained from any source, e.g., a data repository specifically marked for training, data for which permission is provided for use as training data for machine learning, etc. In some embodiments, the training may occur on the media server 101 that provides the training data directly to the user device 115, the training occurs locally on the user device 115, or a combination of both.

In some embodiments, the segmenter 204 uses weights that are taken from another application and are unedited / transferred. For example, in these embodiments, the trained model may be generated, e.g., on a different device, and be provided as part of the segmenter 204. In various embodiments, the trained model may be provided as a data file that includes a model structure or form (e.g., that defines a number and type of neural network nodes, connectivity between nodes and organization of the nodes into a plurality of layers), and associated weights. The segmenter 204 may read the data file for the trained model and implement neural networks with node connectivity, layers, and weights based on the model structure or form specified in the trained model.

The trained machine-learning model may include one or more model forms or structures. For example, model forms or structures can include any type of neural-network, such as a linear network, a deep-learning neural network that implements a plurality of layers (e.g., "hidden layers" between an input layer and an output layer, with each layer being a linear network), a convolutional neural network (e.g., a network that splits or partitions input data into multiple parts or tiles, processes each tile separately using one or more neural-network layers, and aggregates the results from the processing of each tile), a sequence-to-sequence neural network (e.g., a network that receives as input sequential data, such as words in a sentence, frames in a video, etc. and produces as output a result sequence), etc.

The model form or structure may specify connectivity between various nodes and organization of nodes into layers. For example, nodes of a first layer (e.g., an input layer) may receive data as input data or application data. Such data can include, for example, one or more pixels per node, e.g., when the trained model is used for analysis, e.g., of an initial image. Subsequent intermediate layers may receive as input, output of nodes of a previous layer per the connectivity specified in the model form or structure. These layers may also be referred to as hidden layers. For example, a first layer may output a segmentation between a foreground and a background. A final layer (e.g., output layer) produces an output of the machine-learning model. For example, the output layer may receive the segmentation of the initial image into a foreground and a background and output whether a pixel is part of a preserving mask or not. In some embodiments, model form or structure also specifies a number and/ or type of nodes in each layer.

In different embodiments, the trained model can include one or more models. One or more of the models may include a plurality of nodes, arranged into layers per the model structure or form. In some embodiments, the nodes may be computational nodes with no memory, e.g., configured to process one unit of input to produce one unit of output. Computation performed by a node may include, for example, multiplying each of a plurality of node inputs by a weight, obtaining a weighted sum, and adjusting the weighted sum with a bias or intercept value to produce the node output. In some embodiments, the computation performed by a node may also include applying a step/activation function to the adjusted weighted sum. In some embodiments, the step/activation function may be a nonlinear function. In various embodiments, such computation may include operations such as matrix multiplication. In some embodiments, computations by the plurality of nodes may be performed in parallel, e.g., using multiple processors cores of a multicore processor, using individual processing units of a graphics processing unit (GPU), or special-purpose neural circuitry. In some embodiments, nodes may include memory, e.g., may be able to store and use one or more earlier inputs in processing a subsequent input. For example, nodes with memory may include long short-term memory (LSTM) nodes. LSTM nodes may use the memory to maintain "state" that permits the node to act like a finite state machine (FSM).

In some embodiments, the trained model may include embeddings or weights for individual nodes. For example, a model may be initiated as a plurality of nodes organized into layers as specified by the model form or structure. At initialization, a respective weight may be applied to a connection between each pair of nodes that are connected per the model form, e.g., nodes in successive layers of the neural network. For example, the respective weights may be randomly assigned, or initialized to default values. The model may then be trained, e.g., using training data, to produce a result.

Training may include applying supervised learning techniques. In supervised learning, the training data can include a plurality of inputs (e.g., images, preserving masks, etc.) and a corresponding groundtruth output for each input (e.g., a subject groundtruth mask that correctly identifies the subject, a sky groundtruth mask that correctly identifies the sky in each image, a shadow groundtruth mask that correctly identifies the shadows in each image, etc.). Based on a comparison of the output of the model with the groundtruth output, values of the weights are automatically adjusted, e.g., in a manner that increases a probability that the model produces the groundtruth output for the image.

In various embodiments, a trained model includes a set of weights, or embeddings, corresponding to the model structure. In some embodiments, the trained model may include a set of weights that are fixed, e.g., downloaded from a server that provides the weights. In various embodiments, a trained model includes a set of weights, or embeddings, corresponding to the model structure. In embodiments where data is omitted, the segmenter 204 may generate a trained model that is based on prior training, e.g., by a developer of the segmenter 204, by a third-party, etc. In some embodiments, the trained model may include a set of weights that are fixed, e.g., downloaded from a server that provides the weights.

In some embodiments, the trained machine-learning model receives an initial image with a sky and one or more subjects. In some embodiments, the trained machine-learning model outputs a sky mask that corresponds to the sky and one or more subject masks that correspond to the one or more subjects, where the sky mask and the subject mask are preserving masks. In some embodiments, the trained machine-learning model receives an output image with one or more shadows and outputs a shadow mask.

In some embodiments, the machine-learning model outputs a confidence value for each preserving mask output by the trained machine-learning model. The confidence value may be expressed as a percentage, a number from 0 to 1, etc. For example, the machine-learning model outputs a confidence value of 85% for a confidence that a preserving mask correctly incorporates the subject and does not include pixels from another person or an object.

The diffusion module 206 receives a request to change a lighting in the initial image and the initial image as input. The diffusion module 206 outputs an output image that satisfies the request to change the lighting. In some embodiments, the diffusion module 206 performs text conditioning to generate output images that are conditioned on a textual request. For example, if the text request is for a sunset, the diffusion module 206 performs text conditioning by generating a version of the initial image that is modified to look like it was captured during a sunset. The diffusion model may perform diffusion until a balance of efficiency of the process and a quality of the output image is achieved.

In some embodiments, the diffusion module 206 trains the diffusion model using two types of training data. The first type of training data includes pairs of images where the pairs may include synthetic pairs generated through a prompt-to-prompt generative machine-learning model. The prompt-to-prompt generative machine-learning model is a diffusion model that receives a text prompt and uses cross-attention to extract keys and values from the text prompt and switch parts of an attention map previously generated for a first image based on the inputted text prompt to output a second image to match the text prompt.

The second type of training data includes pairs with a real image and a synthetic image. The real image is received by a diffusion model, such as a denoising diffusion implicit model (DDIM). The diffusion model uses an inversion method to output a synthetic image based on the real image and an instruction for how to edit the input image. The diffusion module 206 trains the diffusion model to generate output images from a request using a forward process where the diffusion model adds noise to the data and a reverse process where the diffusion model learns to recover the data from the noise.

The diffusion module 206 trains the diffusion model to maintain photorealism and to preserve the identity of the people shown in the image. During training, the diffusion model receives edit instructions and modifies the edit instructions to create corresponding prompts based on a language model, such as a large language model. For example, the diffusion module 206 converts, using the language model, the edit instructions "make it sunset time" to prompts describing various outdoor scenes in the daylight and the corresponding prompts for sunset. The diffusion model creates a set of input and output image pairs from the generated prompt pairs where each prompt can generate N number of images (using different seeds). The diffusion module 206 filters certain images from the image pairs, such as image transformations that do not match the given edit instruction, image transformations that do not produce well-aligned images, and pairs that do not match. In some embodiments, the diffusion module 206 also filters images based on an edit alignment score that reflects an alignment between the image-to-image transformation and the original edit caption and an image-text alignment score that reflects an alignment between the input/output image and the corresponding input/output prompt. In some embodiments, the diffusion module 206 trains the diffusion model by generating one or more loss functions based on the images that are filtered from the image pairs.

Once the diffusion model is trained, the diffusion model receives requests to change lighting in an initial image. In some embodiments, the request was not directly from the user, but was instead prepopulated by the media application 103, such as the request being selected by a user from a library of premade textual requests.

In some embodiments, the resolution module 208 generates a super resolution version of at least a portion of the output image. For example, the resolution module 208 may generate the super resolution version from the portion of the output image that corresponds to the sky segment. In some embodiments, the diffusion model works best with low-resolution output images. As a result, the resolution module 208 advantageously improves the quality of the sky segment by generating the super resolution version of the output image.

In some embodiments, the resolution module 208 generates the super resolution version of at least the portion of the output image using one or more of the following techniques. The resolution module 208 may perform pre-upsampling by upsampling low-resolution output images to coarse high-resolution images with the desired size using bicubic interpolation and provide the coarse high-resolution images as input to deep convolutional neural networks (CNNs) that output the super resolution versions. The resolution module 208 may perform post-upsampling by providing low-resolution images to the CNNs without increasing resolution and upsampling layers are applied at the end of the CNNs. In some embodiments, the resolution module 208 uses a diffusion model to output the super resolution versions instead of or in addition to the CNN.

The coloring module 210 modifies a coloring of the initial image to match a coloring of the output image. In some embodiments, the coloring module 210 modifies a portion of the initial image, such as the subject and not the rest of the initial image since the rest of the initial image is replaced with a super-resolution version of at least the portion of the output image during blending. As a result, the coloring module 210 may modify a coloring of a portion of the initial image based on the content of the initial image (i.e., whether the initial image includes more than a sky segment and a subject segment).

In some embodiments, the coloring module 210 determines a bilateral grid approximation that is a three-dimensional array that combines a two-dimensional spatial domain that corresponds to an (x, y) position in the image plane with a one-dimensional range dimension that is typically the image intensity. In some embodiments, the coloring module 210 performs a Bilateral Grid Upsamling (BGU) that determines a local color transformation between the initial image and the output image (except for the sky portion) by fitting a low resolution version of the input image/output image pair and applies the affine models to the high-resolution input. The coloring module 210 applies the local color transformation to the initial image while using the sky mask to prevent color of the sky.

The blending module 212 blends the modified initial image with the output image to form a blended image while using the subject mask to prevent modification to the subject from the modified initial image and the sky mask to prevent modification to the sky from the output image during the blending. The subject mask advantageously prevents blending of the subject in the output image with the modified initial image. Because the diffusion module 206 may generate an output image with distortion that is identifiable in the subject, using the subject mask ensures that a distorted version of the subject is not mixed in with the initial image.

The pixels of the sky mask correspond to the pixels of the sky in the initial image and vice versa. When the output image is blended, the pixels of the sky in the modified initial image are not blended or modified respectively. The pixels of the subject mask correspond to the pixels of the subject in the initial image as well as to the pixels of the modified initial image and vice versa. When the modified initial image is blended, the pixels of the subject in the modified initial image are not blended or modified respectively.

In some embodiments where a super resolution version of the output image is generated, the blending module 212 blends the super resolution version of at least a portion of the output image with the modified initial image while using the sky mask to prevent modification to the sky from the modified image during the blending. For example, the blending module 212 may blend the portion of the super resolution version of the output image that corresponds to the sky segment with the modified image. The sky mask advantageously prevents the super resolution version of the sky to be changed by the modified initial image. The blending module 212 may blend the super resolution version of the portion of the output image after the output image is blended with the modified image or all three images may be blended during the same blending step.

In some embodiments, the diffusion module 206 generates the output image with one or more shadows to corresponding objects that are consistent with the lighting. For example, the shadows correspond to the direction of the sunlight cast from the sun. In some embodiments, the segmenter 204 determines outputs a shadow mask that is used to protect the shadow attached to the person and/or object. The blending module 212 may prevent modification to the shadows while blending the output image with the modified image.

Although the diffusion module 206, the resolution module 208, the coloring module 210, and the blending module 212 are illustrated as separate components in Figure 2, one or more components may be combined. For example, the diffusion module 206 may also perform the blending functions described with reference to the blending module 212.

### Example Architecture

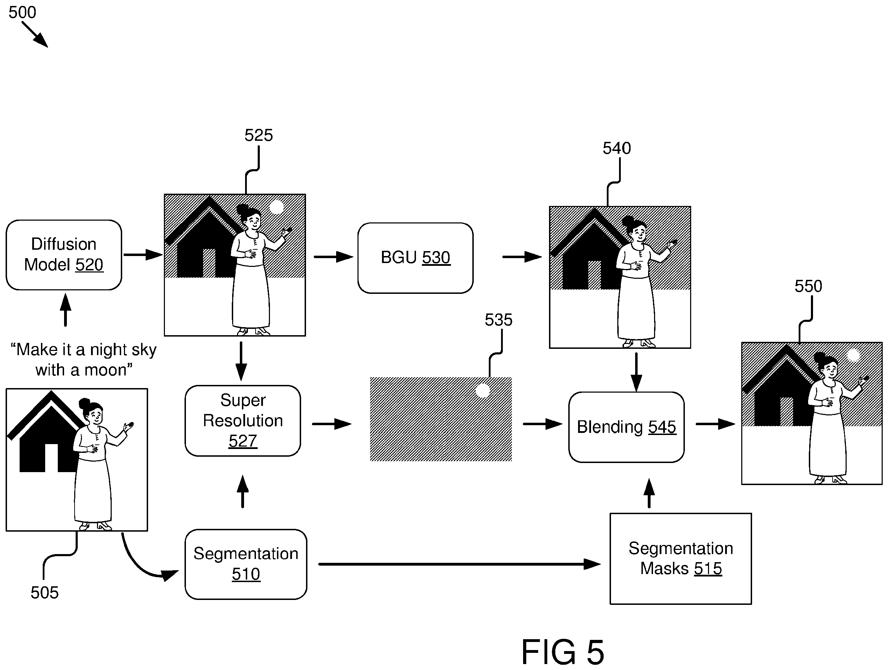

Figure 5 is a block diagram of an example architecture 500 for generating a blended image that incorporates a request. An input image 505 is received by a media application and segmentation 510 is performed on the input image to generate segmentation masks 515. The segmentation masks include a sky segment and a subject segment. The input image 505 and a request to change the lighting is received by a diffusion model 520 that generates an output image 525 that satisfies the textual request. In this example, the request to change the lighting is a request to make the input image 505 into a night scene with a moon.

The media application performs a super resolution 527 process on the sky portion of the output image 525 to increase the quality of the output image 525. As a result of the super resolution 527 process, the media application outputs a super resolution sky image 535.

The diffusion module applies BGU 530 to the initial image so that it matches a coloring of the output image. For example, the modified image 540 has darker colors than the initial image 505 because the modified image 540 looks like it was captured at night.

The media application blends the modified image 540 with the super resolution sky image 535 while using the segmentation masks 515 to prevent the sky in the super resolution sky image 535 from being modified by the modified image 540 by to prevent the subject in the modified image 540 from being combined with a potentially distorted version of the subject from the super resolution sky image 535. The media application blends the images to generate a final image 550.

### Example Flowchart

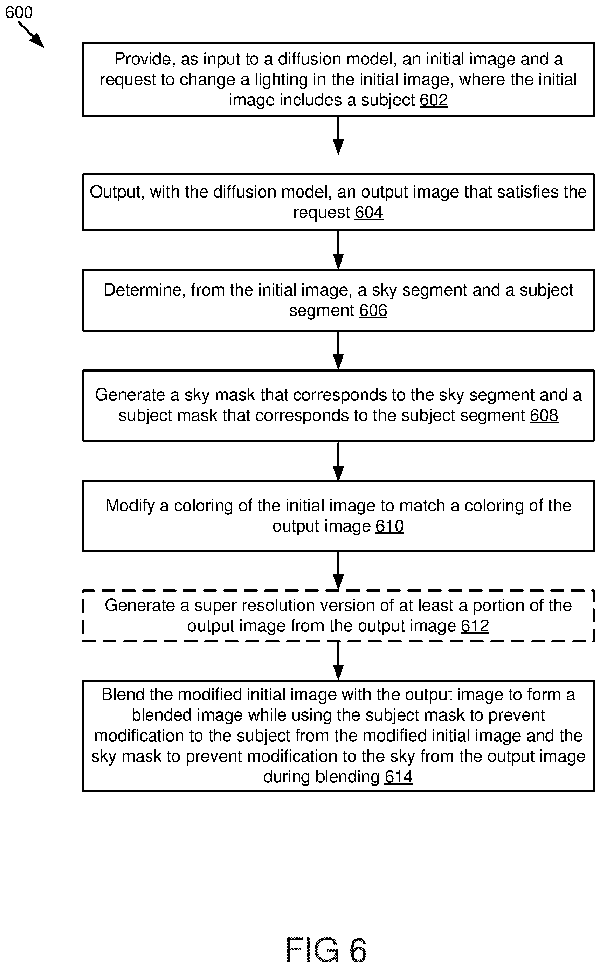

Figure 6 illustrates an example flowchart of a method 600 to generate a blended image with modified lighting. The method 600 may be performed by the computing device 200 in Figure 2. In some embodiments, the method 600 is performed by the user device 115, the media server 101, or in part on the user device 115 and in part on the media server 101.

The method 600 of Figure 6 may begin at block 602. At block 602, an initial image and a request to change a lighting in the initial image are provided as input to a diffusion model, where the initial image includes a subject and a sky.

The request to change the lighting may include a user providing a textual request that includes an attribute selected from a group of a level of light ("change this to a moonlit night"), an amount of clouds in the sky ("change this to a clear sky"), and/or a color of the sky ("change this to a red and orange sky"). The request to change the lighting may include a regional suggestion associated with one or more regions of the initial image, a global preset, a menu of options, and/or a library of premade textual requests.

In some embodiments, the initial image is determined to include an outdoor scene and a suggestion is provided to a user to modify the lighting, wherein the request to change the lighting is received responsive to providing the suggestion. Block 602 may be followed by block 604.

At block 604, the diffusion model outputs an output image that satisfies the request. Block 604 may be followed by block 606.

At block 606, a sky segment and a subject segment are determined from the initial image. Block 606 may be followed by block 608.

At block 608, a sky mask that corresponds to the sky segment and a subject mask that corresponds to the subject segment are generated. Block 608 may be followed by block 610.

At block 610, a coloring of the initial image is modified to match a coloring of the output image. In some embodiments, modifying the coloring of the initial image includes performing BGU that identifies a local color transformation between the initial image and the output image and applying the local color transformation to the initial image. Block 610 may be followed by block 612.

At block 612, an optional step includes a super resolution version of at least a portion of the output image is generated from the output image. Block 612 may be followed by block 614.

At block 614, the modified initial image is blended with the output image to form a blended image while using the subject mask to prevent modification to the subject from the modified initial image and the sky mask to prevent modification to the sky from the output image during the blending. If the super resolution version of at least the portion of the output image is generated, the blending includes blending the super resolution version of at least the portion of the output image while using the subject mask to prevent modification to the subject from the modified initial image and the sky mask to prevent modification to the sky from the super resolution version of at least the portion of the output image during the blending.

In some embodiments, the output image includes one or more shadows that correspond to one or more objects in the output image and the method further includes determining, from the initial image, a shadow segment that corresponds to the one or more shadows in the output image, where blending the output image with the modified initial image includes preventing modification to the one or more shadows from the output image during the blending.

Further to the descriptions above, a user may be provided with controls allowing the user to make an election as to both if and when systems, programs, or features described herein may enable collection of user information (e.g., information about a user's social network, social actions, or activities, profession, a user's preferences, or a user's current location), and if the user is sent content or communications from a server. In addition, certain data may be treated in one or more ways before it is stored or used, so that personally identifiable information is removed. For example, a user's identity may be treated so that no personally identifiable information can be determined for the user, or a user's geographic location may be generalized where location information is obtained (such as to a city, ZIP code, or state level), so that a particular location of a user cannot be determined. Thus, the user may have control over what information is collected about the user, how that information is used, and what information is provided to the user.

Thus, according to the aforesaid, a media application provides, as input to a diffusion model, an initial image and a request to change a lighting in the initial image, wherein the initial image includes a subject and a sky. The media application outputs, with the diffusion model, an output image that satisfies the request. The media application determines, from the initial image, a sky segment and a subject segment. The media application generates a sky mask that corresponds to the sky segment and a subject mask that corresponds to the subject segment. The media application modifies a coloring of the initial image to match a coloring of the output image. The media application blends the modified initial image with the output image to form a blended image while using the subject mask to prevent modification to the subject from the modified initial image and the sky mask to prevent modification to the sky from the output image during the blending.

In the above description, for purposes of explanation, numerous specific details are set forth in order to provide a thorough understanding of the specification. It will be apparent, however, to one skilled in the art that the disclosure can be practiced without these specific details. In some instances, structures and devices are shown in block diagram form in order to avoid obscuring the description. For example, the embodiments can be described above primarily with reference to user interfaces and particular hardware. However, the embodiments can apply to any type of computing device that can receive data and commands, and any peripheral devices providing services.

Reference in the specification to "some embodiments" or "some instances" means that a particular feature, structure, or characteristic described in connection with the embodiments or instances can be included in at least one implementation of the description. The appearances of the phrase "in some embodiments" in various places in the specification are not necessarily all referring to the same embodiments.

Some portions of the detailed descriptions above are presented in terms of algorithms and symbolic representations of operations on data bits within a computer memory. These algorithmic descriptions and representations are the means used by those skilled in the data processing arts to most effectively convey the substance of their work to others skilled in the art. An algorithm is here, and generally, conceived to be a self-consistent sequence of steps leading to a desired result. The steps are those requiring physical manipulations of physical quantities. Usually, though not necessarily, these quantities take the form of electrical or magnetic data capable of being stored, transferred, combined, compared, and otherwise manipulated. It has proven convenient at times, principally for reasons of common usage, to refer to these data as bits, values, elements, symbols, characters, terms, numbers, or the like.

It should be borne in mind, however, that all of these and similar terms are to be associated with the appropriate physical quantities and are merely convenient labels applied to these quantities. Unless specifically stated otherwise as apparent from the following discussion, it is appreciated that throughout the description, discussions utilizing terms including "processing" or "computing" or "calculating" or "determining" or "displaying" or the like, refer to the action and processes of a computer system, or similar electronic computing device, that manipulates and transforms data represented as physical (electronic) quantities within the computer system's registers and memories into other data similarly represented as physical quantities within the computer system memories or registers or other such information storage, transmission, or display devices.

The embodiments of the specification can also relate to a processor for performing one or more steps of the methods described above. The processor may be a special-purpose processor selectively activated or reconfigured by a computer program stored in the computer. Such a computer program may be stored in a non-transitory computer-readable storage medium, including, but not limited to, any type of disk including optical disks, ROMs, CD-ROMs, magnetic disks, RAMs, EPROMs, EEPROMs, magnetic or optical cards, flash memories including USB keys with non-volatile memory, or any type of media suitable for storing electronic instructions, each coupled to a computer system bus.

The specification can take the form of some entirely hardware embodiments, some entirely software embodiments or some embodiments containing both hardware and software elements. In some embodiments, the specification is implemented in software, which includes, but is not limited to, firmware, resident software, microcode, etc.

Furthermore, the description can take the form of a computer program product accessible from a computer-usable or computer-readable medium providing program code for use by or in connection with a computer or any instruction execution system. For the purposes of this description, a computer-usable or computer-readable medium can be any apparatus that can contain, store, communicate, propagate, or transport the program for use by or in connection with the instruction execution system, apparatus, or device.

A data processing system suitable for storing or executing program code will include at least one processor coupled directly or indirectly to memory elements through a system bus. The memory elements can include local memory employed during actual execution of the program code, bulk storage, and cache memories which provide temporary storage of at least some program code in order to reduce the number of times code must be retrieved from bulk storage during execution.

## Claims

1. A computer-implemented method (600) to modify a lighting of an image comprising:
providing (602), as input to a diffusion model, an initial image and a request to change a lighting in the initial image, wherein the initial image includes a subject and a sky;
outputting (604), with the diffusion model, an output image that satisfies the request;
determining (606), from the initial image, a sky segment and a subject segment;
generating (608) a sky mask that corresponds to the sky segment and a subject mask that corresponds to the subject segment;
modifying (610) a coloring of the initial image to match a coloring of the output image; and
blending (614) the modified initial image with the output image to form a blended image while using the subject mask to prevent modification to the subject from the modified initial image and the sky mask to prevent modification to the sky from the output image during the blending.

2. The method of claim 1, wherein modifying the coloring of the initial image includes:
performing Bilateral Grid Upsampling, BGU, that identifies a local color transformation between the initial image and the output image; and
applying the local color transformation to the initial image.

3. The method of claim 1, further comprising:
generating (612) a super resolution version of at least a portion of the output image from the output image;
wherein blending the modified initial image with the output image includes blending the super resolution version of at least the portion of the output image while using the subject mask to prevent modification to the subject from the modified initial image and the sky mask to prevent modification to the sky from the super resolution version of at least the portion of the output image during the blending.

4. The method of claim 1, wherein the output image includes one or more shadows that correspond to one or more objects in the output image and further comprising:
determining, from the output image, a shadow segment that corresponds to the one or more shadows in the output image; and
generating a shadow mask that corresponds to the shadow segment;
wherein blending the output image with the modified initial image includes using the shadow mask to prevent modification to the one or more shadows from the output image during the blending.

5. The method of claim 1, wherein the request to change the lighting includes a user providing a textual request that includes an attribute selected from a group of a level of light, an amount of clouds in the sky, a color of the sky, and combinations thereof.

6. The method of claim 1, wherein the request to change the lighting is selected from a group of a regional suggestion associated with one or more regions of the initial image, a global preset, a menu of options, a library of premade textual requests, and combinations thereof.

7. The method of claim 1, further comprising:
before receiving the request to change the lighting in the initial image, determining that the initial image includes an outdoor scene; and
providing a suggestion to a user to modify the lighting.

8. A non-transitory computer-readable medium to modify a lighting of an image with instructions stored thereon that, when executed by one or more processors, cause the one or more processors to perform steps of the method according to any one of the preceding claims.

9. A system to modify a lighting of an image comprising:
a processor; and
a memory coupled to the processor, with instructions stored thereon that, when executed by the processor, cause the processor to perform steps of the method according to any one of the preceding claims 1 to 7.

## Patentansprüche

1. Computerimplementiertes Verfahren (600), um eine Beleuchtung eines Bildes zu modifizieren, umfassend:
Bereitstellen (602) eines Ausgangsbildes und einer Anforderung, eine Beleuchtung in dem Ausgangsbild zu ändern, als Eingabe in ein Diffusionsmodell, wobei das Ausgangsbild ein Subjekt und einen Himmel beinhaltet;
Ausgeben (604) eines Ausgabebildes, das die Anforderung erfüllt, mit dem Diffusionsmodell;
Bestimmen (606) eines Himmelssegments und eines Subjektsegments aus dem Ausgangsbild;
Generieren (608) einer Himmelsmaske, die dem Himmelssegment entspricht, und einer Subjektmaske, die dem Subjektsegment entspricht;
Modifizieren (610) einer Färbung des Ausgangsbildes, um einer Färbung des Ausgabebildes zu entsprechen; und
Mischen (614) des modifizierten Ausgangsbildes mit dem Ausgabebild, um ein gemischtes Bild auszubilden, während die Subjektmaske verwendet wird, um eine Modifikation des Subjekts aus dem modifizierten Ausgangsbild zu verhindern, und die Himmelsmaske, um eine Modifikation des Himmels aus dem Ausgabebild während des Mischens zu verhindern.

2. Verfahren nach Anspruch 1, wobei das Modifizieren der Färbung des Ausgangsbildes Folgendes beinhaltet:
Durchführen von Bilateral Grid Upsampling, BGU, das eine lokale Farbtransformation zwischen dem Ausgangsbild und dem Ausgabebild identifiziert; und
Anwenden der lokalen Farbtransformation auf das Ausgangsbild.

3. Verfahren nach Anspruch 1, ferner umfassend:
Generieren (612) einer hochauflösenden Version mindestens eines Abschnitts des Ausgabebildes aus dem Ausgabebild;
wobei das Mischen des modifizierten Ausgangsbildes mit dem Ausgabebild Mischen der hochauflösenden Version mindestens des Abschnitts des Ausgabebildes beinhaltet, während die Subjektmaske verwendet wird, um eine Modifikation des Subjekts aus dem modifizierten Ausgangsbild zu verhindern, und die Himmelsmaske, um eine Modifikation des Himmels aus der hochauflösenden Version mindestens des Abschnitts des Ausgabebildes während des Mischens zu verhindern.

4. Verfahren nach Anspruch 1, wobei das Ausgabebild einen oder mehrere Schatten beinhaltet, die einem oder mehreren Objekten in dem Ausgabebild entsprechen, und ferner umfassend:
Bestimmen eines Schattensegments, das dem einen oder mehreren Schatten in dem Ausgabebild entspricht, aus dem Ausgabebild; und
Generieren einer Schattenmaske, die dem Schattensegment entspricht;
wobei das Mischen des Ausgabebildes mit dem modifizierten Ausgangsbild Verwenden der Schattenmaske beinhaltet, um eine Modifikation des einen oder der mehreren Schatten aus dem Ausgabebild während des Mischens zu verhindern.

5. Verfahren nach Anspruch 1, wobei die Anforderung, die Beleuchtung zu ändern, beinhaltet, dass ein Benutzer eine Textanforderung bereitstellt, die ein Attribut beinhaltet, das aus einer Gruppe aus einer Lichtstärke, einer Menge an Wolken am Himmel, einer Farbe des Himmels und Kombinationen davon ausgewählt wird.

6. Verfahren nach Anspruch 1, wobei die Anforderung, die Beleuchtung zu ändern, aus einer Gruppe aus einem regionalen Vorschlag, der mit einer oder mehreren Regionen des Ausgangsbildes verknüpft ist, einer globalen Voreinstellung, einem Menü mit Optionen, einer Bibliothek vorgefertigter Textanforderungen und Kombinationen davon ausgewählt wird.

7. Verfahren nach Anspruch 1, ferner umfassend:
vor dem Empfangen der Anforderung, die Beleuchtung in dem Ausgangsbild zu ändern, Bestimmen, dass das Ausgangsbild eine Außenszene beinhaltet; und
Bereitstellen eines Vorschlags an einen Benutzer, die Beleuchtung zu modifizieren.

8. Nichttransitorisches computerlesbares Medium, um eine Beleuchtung eines Bildes zu modifizieren, mit darauf gespeicherten Anweisungen, die bei Ausführung durch einen oder mehrere Prozessoren den einen oder die mehreren Prozessoren veranlassen, Schritte des Verfahrens nach einem der vorhergehenden Ansprüche durchzuführen.

9. System, um eine Beleuchtung eines Bildes zu modifizieren, umfassend:
einen Prozessor; und
einen an den Prozessor gekoppelten Speicher mit darauf gespeicherten Anweisungen, die bei Ausführung durch den Prozessor den Prozessor veranlassen, Schritte des Verfahrens nach einem der vorhergehenden Ansprüche 1 bis 7 durchzuführen.

## Revendications

1. Procédé mis en œuvre par ordinateur (600) pour modifier l'éclairage d'une image comprenant :
la fourniture (602), en tant qu'entrée d'un modèle de diffusion, d'une image initiale et d'une demande de modification d'éclairage dans l'image initiale, dans lequel l'image initiale comporte un sujet et un ciel ;
la production (604), avec le modèle de diffusion, d'une image de sortie qui satisfait la demande ;
la détermination (606), à partir de l'image initiale, d'un segment de ciel et d'un segment de sujet ;
la génération (608) d'un masque de ciel qui correspond au segment de ciel et d'un masque de sujet qui correspond au segment de sujet ;
la modification (610) d'une coloration de l'image initiale pour correspondre à une coloration de l'image de sortie ; et
la fusion (614) de l'image initiale modifiée avec l'image de sortie pour former une image fusionnée tout en utilisant le masque de sujet pour empêcher la modification du sujet à partir de l'image initiale modifiée et le masque de ciel pour empêcher la modification du ciel à partir de l'image de sortie pendant la fusion.

2. Procédé selon la revendication 1, dans lequel la modification de la coloration de l'image initiale comporte :
la réalisation d'un suréchantillonnage bilatéral par grille, BGU, qui identifie une transformation de couleur locale entre l'image initiale et l'image de sortie ; et
l'application de la transformation de couleur locale à l'image initiale.

3. Procédé selon la revendication 1, comprenant également :
la génération (612) d'une version super résolution d'au moins une partie de l'image de sortie à partir de l'image de sortie ;
dans lequel la fusion de l'image initiale modifiée avec l'image de sortie comporte la fusion de la version super résolution d'au moins la partie de l'image de sortie tout en utilisant le masque de sujet pour empêcher la modification du sujet à partir de l'image initiale modifiée et le masque de ciel pour empêcher la modification du ciel à partir de la version super résolution d'au moins la partie de l'image de sortie pendant la fusion.

4. Procédé selon la revendication 1, dans lequel l'image de sortie comporte une ou plusieurs ombres correspondant à un ou plusieurs objets de l'image de sortie et comprenant également :
la détermination, à partir de l'image de sortie, d'un segment d'ombre correspondant aux une ou plusieurs ombres dans l'image de sortie ; et
la génération d'un masque d'ombre qui correspond au segment d'ombre ;
dans lequel la fusion de l'image de sortie avec l'image initiale modifiée comporte l'utilisation du masque d'ombre pour empêcher la modification des une ou plusieurs ombres de l'image de sortie pendant la fusion.

5. Procédé selon la revendication 1, dans lequel la demande de modification d'éclairage comporte une demande textuelle de l'utilisateur qui comporte un attribut sélectionné parmi un groupe composé d'un niveau de lumière, d'une quantité de nuages dans le ciel, d'une couleur du ciel et des combinaisons de ceux-ci.

6. Procédé selon la revendication 1, dans lequel la demande de modification d'éclairage est sélectionnée parmi un groupe de suggestions régionales associées à une ou plusieurs régions de l'image initiale, un préréglage global, un menu d'options, une bibliothèque de demandes textuelles prédéfinies et des combinaisons de ceux-ci.

7. Procédé selon la revendication 1, comprenant également :
avant de recevoir la demande de modification d'éclairage de l'image initiale, la détermination selon laquelle l'image initiale comporte une scène extérieure ; et
la fourniture d'un suggestion de modification de l'éclairage à un utilisateur.

8. Support non transitoire lisible par ordinateur pour modifier l'éclairage d'une image sur lequel sont stockées des instructions qui, lorsqu'elles sont exécutées par un ou plusieurs processeurs, amènent les un ou plusieurs processeurs à réaliser des étapes du procédé selon l'une quelconque des revendications précédentes.

9. Système de modification d'éclairage d'une image comprenant :
un processeur ; et
une mémoire couplée au processeur, sur laquelle sont stockées des instructions qui, lorsqu'elles sont exécutées par le processeur, amènent le processeur à réaliser des étapes du procédé selon l'une quelconque des revendications précédentes 1 à 7.
